Europäisches Patentamt

(19) European Patent Office

Office européen des brevets

(11) Numéro de publication : **0 162 759**
**B1**

(12) ## FASCICULE DE BREVET EUROPÉEN

(45) Date de publication du fascicule du brevet :
28.09.88

(51) Int. Cl.⁴ : **A 01 D 90/08**

(21) Numéro de dépôt : **85400809.1**

(22) Date de dépôt : **25.04.85**

(54) **Dispositif pour l'arrimage sur un véhicule de chargements de balles de fourrage de grandes dimensions.**

(30) Priorité : **09.05.84 FR 8407147**

(43) Date de publication de la demande :
**27.11.85 Bulletin 85/48**

(45) Mention de la délivrance du brevet :
**28.09.88 Bulletin 88/39**

(84) Etats contractants désignés :
**AT BE CH DE GB IT LI LU NL SE**

(56) Documents cités :
**US-A- 3 662 900**

(73) Titulaire : **Cosnet, Pascal**
**"Le Patis"**
**F-72550 Coulans sur Gee (FR)**

(72) Inventeur : **Cosnet, Pascal**
**"Le Patis"**
**F-72550 Coulans sur Gee (FR)**

(74) Mandataire : **Moulines, Pierre et al**
**Cabinet BEAU de LOMENIE 55, rue d'Amsterdam**
**F-75008 Paris (FR)**

## Description

La présente invention a pour objet un système pour l'arrimage de fourrage (paille, foin, ensilage, chanvre, etc.) conditionné en balles rondes ou non, de grandes dimensions, sur une remorque.

Les moyens d'arrimage employés pour les chargements de balles rondes sont actuellement les mêmes que ceux pour le chargement de petits ballots carrés ; c'est-à-dire arrimage longitudinal à l'aide de deux cordages, disposés en étant montés sur le chargement étendus par les moulinets de la remorque. Cette méthode est aléatoire, inefficace et très dangereuse en ce qui concerne ces grosses balles ; car, contrairement aux petites balles carrées, ces grosses balles ne peuvent être croisées à la confection du chargement, compte tenu de leur dimension (1,20 m), elles sont systématiquement juxtaposées deux à deux dans la largeur de la remorque (2,40 m, largeur autorisée) à chaque niveau (1, 2 ou 3). Ceci peut entraîner une « fissuration » longitudinale du chargement dû à l'écartement de chacune des colonnes lors des secousses et devers en cours de transport-fissuration, qui, malgré les cordages, tend à s'ouvrir davantage à chaque balancement de la remorque.

Par ailleurs, le brevet américain n° 3,662,900 révèle un organe de retenue des balles en forme de T constitué d'au moins un élément allongé dans la partie médiane duquel est fixée une première extrémité d'un bras s'étendant perpendiculairement audit élément. L'élément allongé présente à chaque extrémité au moins une aiguille susceptible d'être engagée dans une balle. Cet organe de retenue est maintenu arc-bouté contre le chargement de balles au moyen d'un système articulé complexe et coûteux.

La présente invention a pour but de résoudre les inconvénients précités en proposant un système d'arrimage de conception simple permettant la fixation, de façon solide, de chargements de balles rondes, éventuellement ceux de grosses balles carrées ou rectangulaires, quels que soient leur densité, leur hauteur, leur longueur, leur contenu, quels que soient le nombre de rangs et la remorque employée. Il permet en outre l'arrimage par un manipulateur restant au sol.

La solution, conforme à la présente invention, pour résoudre ce problème technique consiste en un système comprenant au moins un organe de retenue des balles en forme de T constitué d'au moins un élément allongé dans la partie médiane duquel est fixée une première extrémité d'un bras s'étendant perpendiculairement audit élément ; Ledit élément allongé présentant à chaque extrémité au moins une aiguille susceptible d'être engagée dans l'une de deux balles juxtaposées, caractérisé en ce que ledit bras présente à sa deuxième extrémité au moins un organe d'ancrage susceptible d'être engagé dans au moins une balle disposée verticalement relativement aux deux balles recevant les aiguilles dudit élément allongé, et en ce que ledit système comprend une sangle destinée à coopérer avec ledit organe de retenue pour arrimer lesdites balles, et pourvue de moyens de mise en tension et d'accrochage au châssis du véhicule, ledit organe de retenue comprenant deux organes de guidage de ladite sangle dont l'un est disposé au centre de l'élément allongé et dont l'autre est disposé à ladite deuxième extrémité du bras du côte opposé à l'organe d'ancrage.

Avantageusement, ce système comprend deux organes de retenue précités, destinés à être disposés de part et d'autre latéralement au chargement, associés à une sangle destinée à relier les organes de retenue en maintenant ainsi de façon fixe les balles de fourrage. Comme on le comprend, on peut utiliser plusieurs tels systèmes pour l'arrimage d'un chargement important de balles.

Selon une caractéristique particulière, chaque organe de retenue est disposé de telle sorte que l'élément allongé soit en position horizontale supérieure, les aiguilles de chaque extrémité étant inclinées vers le bas.

Cette partie horizontale se brandit par l'intermédiaire du bras, afin d'être plantée simultanément et symétriquement par ses aiguilles dans deux balles juxtaposées, parallèlement et au niveau de leurs axes horizontaux de préférence, ceci au dernier rang du chargement. L'élément d'ancrage situé à la deuxième extrémité du bras est dirigé dans le même sens que les aiguilles de l'élément allongé et possède un guide-sangle à l'opposé de sa pointe. Le système étant suspendu par ses aiguilles supérieures plantées dans les balles du dernier rang, il suffit, bras en main, d'enfoncer l'élément d'ancrage, par pivotement dudit bras, dans la balle du rang par exemple immédiatement inférieur, d'un mouvement d'avant en arrière, de préférence en dessous de l'axe horizontal de ladite balle dans une zone où le fourrage est plus serré (endroit tassé préalablement choisi). Les aiguilles de l'organe de retenue peuvent être plantées en dessus ou en dessous de l'axe horizontal des ballots du dernier rang. Les organes de retenue d'un système étant en place sur chaque côté du chargement, face à face, l'utilisateur peut lancer une sangle par-dessus l'ensemble et transversalement. Cette opération peut être répétée pour chaque système.

Les sangles étant guidées par les espaces en « V » créés entre les balles rondes supérieures juxtaposées sont aisément mises en place entre les guides des éléments de retenue qu'elles chevauchent.

Elles sont bandées de part et d'autre du chargement à l'aide de tendeurs mobiles s'accrochant au châssis de la remorque. L'ancre a alors pour effet de limiter au maximum le déplacement vertical du haut vers le bas que le dispositif effectue lors de la tension de la sangle. selon des modes particuliers de réalisation, l'appareil peut être métallique, en acier, en aluminium ou en alliage, en bois, ou en matière plastique.

La partie horizontale du « T » peut être constituée soit d'une barre, soit de plusieurs barres horizontales superposées, munies de plusieurs aiguilles disposées ou non aux extrémités, ou encore sous forme de plaque.

Le bras vertical peut être télescopique ou non en un ou plusieurs éléments disposés parallèlement ou non. Le bras vertical peut posséder plusieurs ancres superposées à son extrémité, lesdites ancres peuvent également être disposées aux extrémités ou réparties sur au moins une barre fixée à la partie inférieure du bras, parallèlement à la plaque supérieure qui porte les aiguilles : ainsi il y a une plaque à aiguille supérieure et une barre à ancre inférieure ; un tel agencement étant particulièrement destiné au chargement à trois rangs, l'organe de retenue se fixe par ses aiguilles à deux balles juxtaposées du dernier rang supérieur, et s'ancre symétriquement dans chacune des balles du premier rang inférieur se trouvant en dessous, le bras passe donc dans l'axe vertical de la balle interposée du deuxième rang. Au contraire d'une fixation sur deux rangs successifs, les balles du dessous se trouvent décalées, dans ce cas l'ancrage s'effectue dans une seule botte. La partie supérieure horizontale a pour intérêt de retenir deux balles juxtaposées au dernier rang sous la pression qu'exerce la sangle, en face à face ces parties supérieures horizontales lorsqu'elles sont chevauchées d'une sangle tendue permettent le rapprochement deux par deux des balles étant en vis-à-vis. Ladite sangle pouvant être remplacée par un cordage tendu à l'aide de moulinets quelconques.

A titre d'illustration des dessins sont joints :

— La figure 1 est une vue en élévation de profil d'un premier mode de réalisation préférentiel d'un organe de retenue du système conforme à l'invention ;

— la figure 2 est une vue en plan du même organe de retenue ;

— les figures 3, 4, 5, 6 représentent des variantes de réalisation de l'organe de retenue au niveau des aiguilles du bras et de l'ancre, celles-ci pouvant être non limitativement combinées les unes aux autres ;

— la figure 7 représente une vue de l'avant d'une remorque arrimée à l'aide de plusieurs systèmes conformes à l'invention ;

— la figure 8 représente un chargement de ballots vu d'un côté, en deux rangs, arrimé à l'aide de plusieurs systèmes conformes à l'invention, où l'on peut voir les sangles et les tendeurs ;

— la figure 9 représente un chargement trois rangs, arrimé avec trois systèmes selon l'invention ;

— la figure 10 représente en détail l'ancre d'un organe de retenue

— la figure 11 représente en détail cette ancre vue en coupe sur sa longueur ;

— la figure 12 représente en détail cette ancre vue en coupe suivant sa largeur ;

— la figure 13 est une vue en élévation d'un élément horizontal muni d'une aiguille montée suivant l'invention ;

— la figure 14 est une vue de profil suivant la flèche 14 de la figure 13 ; et

— la figure 15 est une vue d'un perfectionnement d'une sangle d'un système conforme à l'invention.

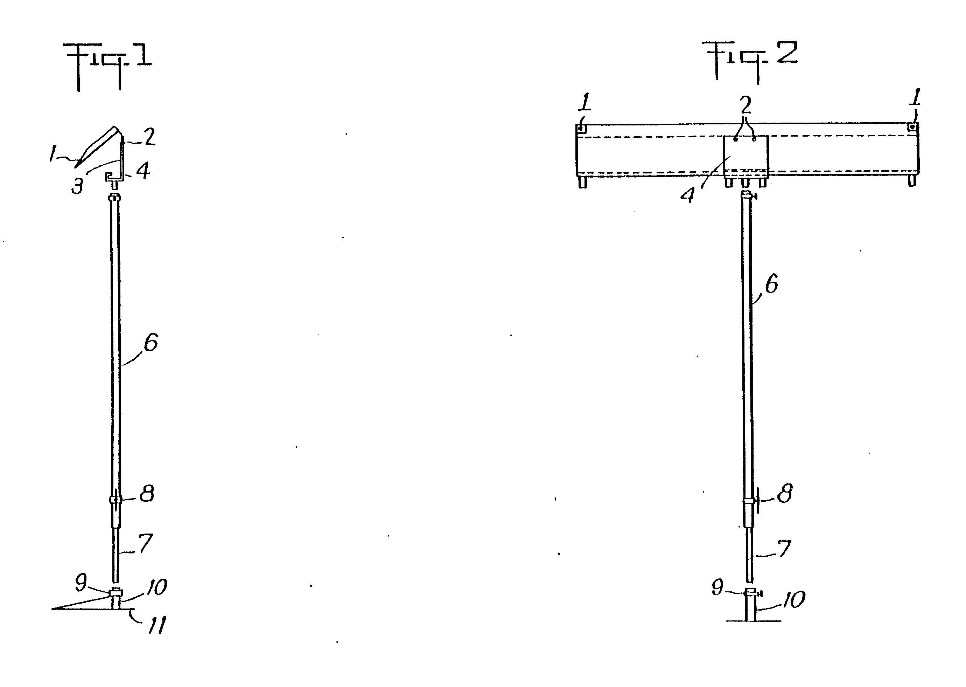

Suivant la figure 1, un organe de retenue du système conforme à l'invention possède deux aiguilles 1 fléchant vers le bas, avec un angle d'environ 37° par rapport au bras télescopique 6, 7. Ceci permettant à l'organe une meilleure fixation elles sont longues pour pénétrer aisément dans n'importe quel fourrage, suffisamment pour retenir l'ensemble du dispositif avant et après l'ancrage. Les aiguilles 1 sont boulonnées aux extrémités supérieures de la plaque supérieure 3, elles sont réalisées par exemple en fer plat de 5 mm x 25 mm et d'une longueur de 200 mm.

Ladite plaque 3 est réalisée en tôle pliée, par exemple de 15 mm d'épaisseur et de 1180 mm de longueur. Sa section verticale est constituée de 7 plis constituant un renfort. Cette plaque 3 est reliée au bras 6, 7 par l'intermédiaire d'une platine centrale 4, les deux parties étant fixées par des boulons 2, ceux-ci ayant un second rôle de guide-sangle 2 supérieur. Ladite platine 4 est réalisée en tôle de 2 mm, elle possède une prolongation inférieure, laquelle permet l'adaptation à la partie supérieure du bras 6, 7. Ledit bras est composé d'un tube 6 par exemple de 20/27 mm, d'une longueur de 1180 mm à l'intérieur duquel se trouve un fer rond plein 7 de 20 mm de diamètre et d'une longueur de 1150 mm, ces deux parties glissent l'une dans l'autre, ce qui permet au bras d'obtenir la longueur désirée, ces parties étant bloquées par une bride 8 munie d'une poignée filetée, qui bloque le fer rond plein à l'intérieur du tube lors du serrage. Le bras 6, 7 se termine en partie inférieure par une ancre 10. Perpendiculaire à celui-ci, cette ancre 10 possède un guide-sangle 11 à l'opposé de sa pointe. Ladite ancre 10 est par exemple réalisée en tôle plane (voir figures 12, 13 et 14) d'épaisseur 30 mm, d'une longueur de 300 mm et d'une largeur de 170 mm, elle est renforcée dans sa longueur par un gousset 20 soudé de 220 mm de long, en partant de la pointe à l'ancre. Il est également soudé sur la partie représentant sa hauteur de 40 mm à un tube 21 de 20/27 mm, long de 60 mm, disposé verticalement. A l'intérieur de ce tube 21 se fixe l'extrémité inférieure du bras 7 par une bride 9.

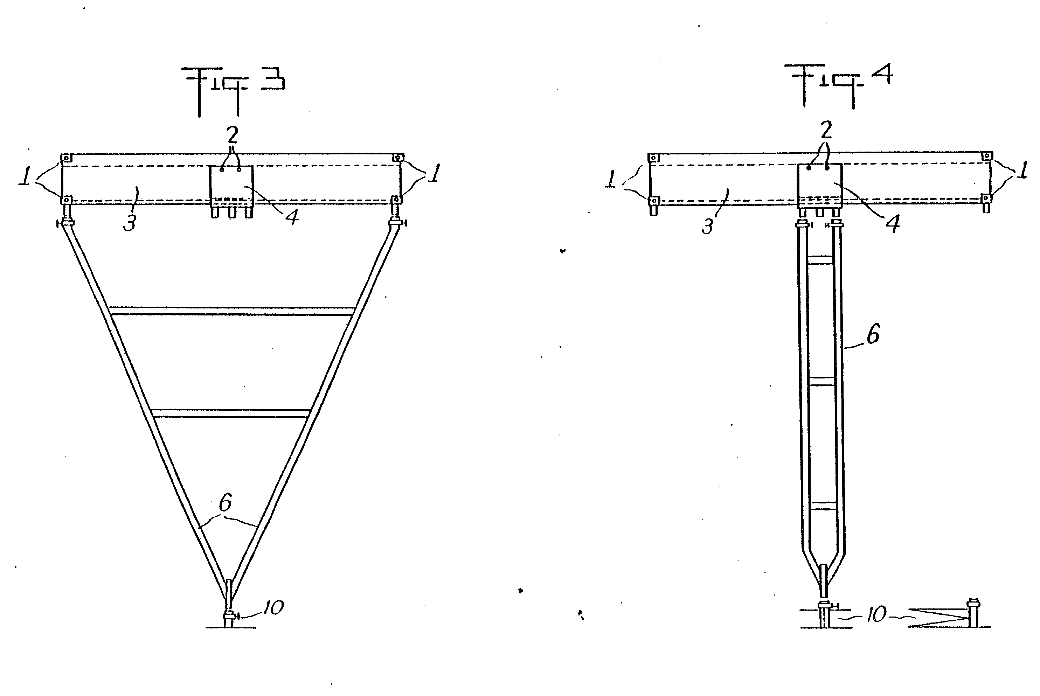

La figure 2 montre la position et la fixation boulonnée des aiguilles aux angles supérieurs de la plaque 3 et la position centrale de la platine 4 fixée par les deux boulons 2 dont les parties dépassantes constituent entre elles le guide-sangle.

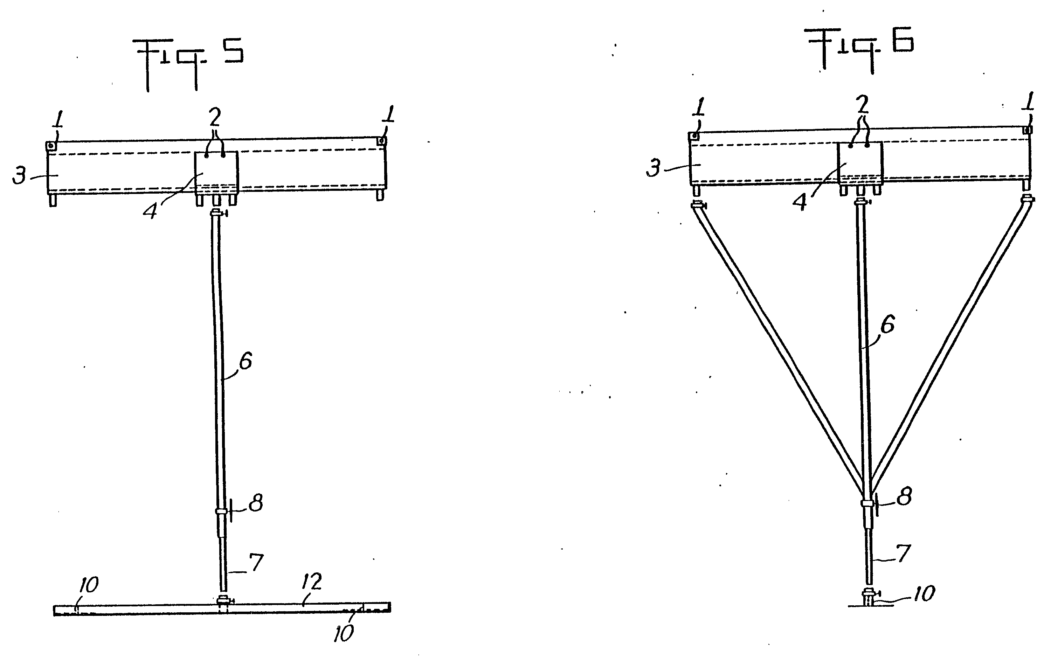

La figure 3 montre l'organe de retenue avec les variantes suivantes :

Quatre aiguilles 1 à chaque angle de la plaque 3.

Un bras 6 non télescopique partant de chaque extrémité inférieure de la plaque 3, les bras se rejoignant à l'ancre unique 10 ; les bras 6 consolidés par des entretoises. Cet appareil convient particulièrement pour le cas de balles moins tassées ; quatre aiguilles adhèrent mieux que deux. Il est également plus solide au niveau de son bras.

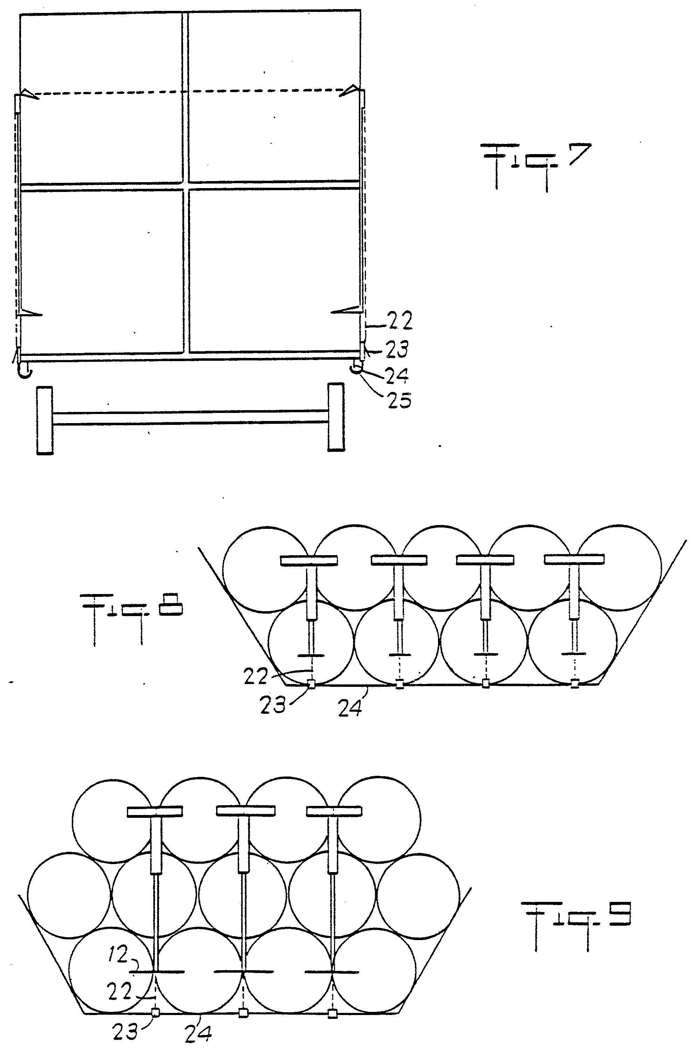

La figure 4 montre une variante de l'organe de retenue au niveau du bras 6 non télescopique pourvu de deux tiges partant de chaque extrémité de la platine 4 et jointes par des entretoises. Ces bras se rejoignent et sont associés à deux ancres 10 superposées, ce qui permet une plus grande stabilité à l'ensemble du dispositif notamment un meilleur ancrage.

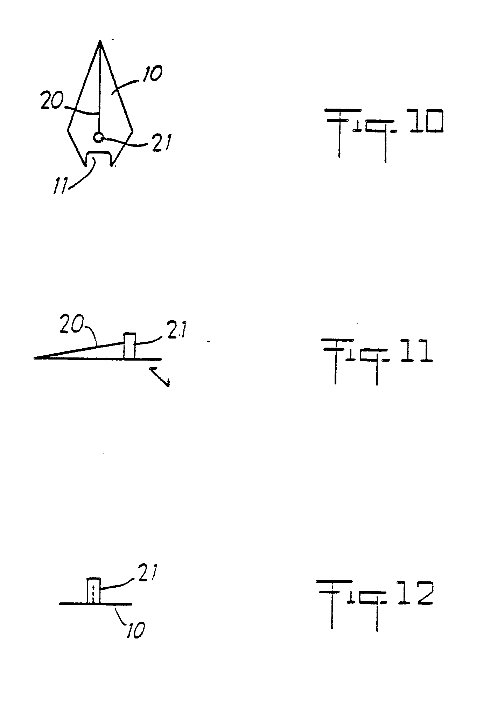

La figure 5 montre une variante de l'organe de retenue au niveau de l'ancre : parallèlement à la plaque 3 à l'autre extrémité du bras 6 télescopique une barre 12 comporte à chacune de ses extrémités une ancre 10 pointant dans le même sens que les aiguilles. Ceci permet à l'appareil une meilleure adhérence dans le fourrage, d'autant plus que, si le chargement possède trois rangs, cette barre permet l'ancrage dans deux ballots juxtaposés du premier rang. L'espacement des ancres correspond par exemple à l'espacement des aiguilles supérieures. Cette barre à ancre peut être consolidée en comportant plusieurs bras parallèles ou non, par conséquent elle est reliée à la barre aiguille 3 par un bras 6, 7 pouvant être constitué de plusieurs parties, comme à la figure 3 ou à la figure 4 par exemple.

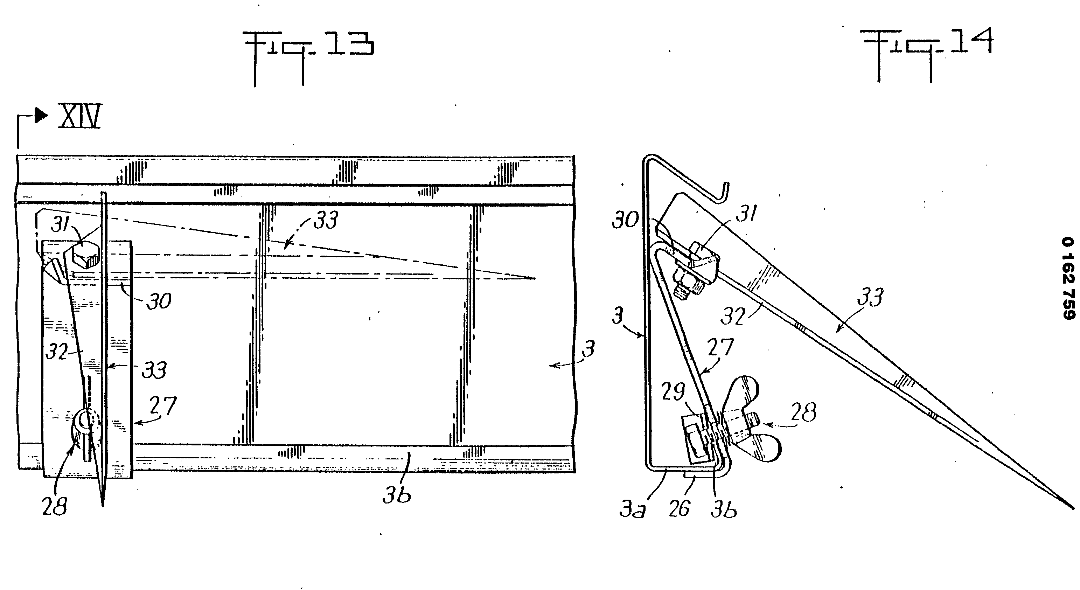

La figure 6 montre une variante de l'organe de retenue au niveau de son bras 6 constitué de trois parties, une étant télescopique, identique au dispositif selon figure 1, les deux autres étant disposées angulairement dans le but de consolider le dispositif, ce qui lui donne une meilleure rigidité.

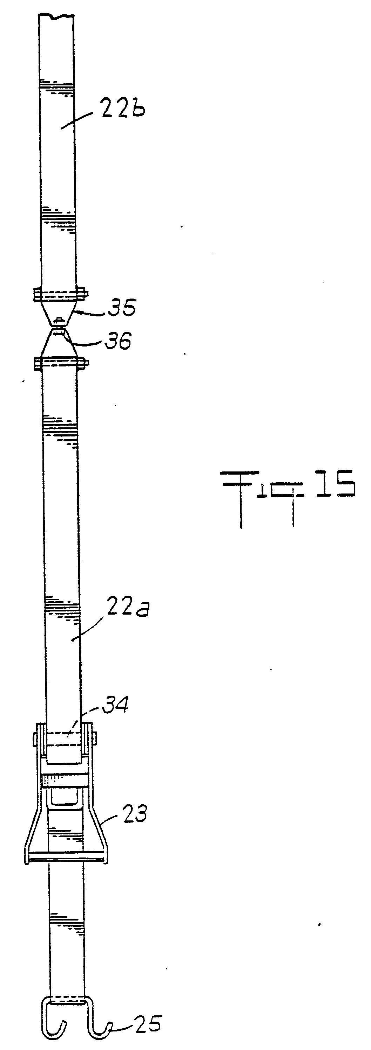

La figure 7 représente une coupe transversale vue de devant d'un chargement de balles rondes « deux rangs » arrimé à l'aide d'un système conforme à l'invention comportant deux organes de retenue face à face fixés latéralement au chargement et chevauchés de part et d'autre par une sangle 22 tendue à l'aide du tendeur mobile 23 et des moyens d'accrochage 25 au châssis de la remorque 24.

La figure 8 représente un chargement de deux rangs en balles rondes, arrimé avec plusieurs systèmes conformes à l'invention, montrant une sangle 22 bandée par un tendeur 23 fixé au châssis de la remorque 24.

Il est également possible d'effectuer un chargement de trois rangs en balles rondes arrimé au niveau des deux rangs supérieurs à l'aide de plusieurs organes de retenue selon figure 1.

La figure 9 représente un chargement de trois rangs en balles rondes, arrimé à l'aide de plusieurs organes de retenue selon la figure 5, qui possèdent une barre munie de deux ancres permettant un ancrage dans deux balles du premier rang.

Les figures 10, 11 et 12 représentent l'arrière de l'organe de retenue vu sur trois plans, ceci pour observer sa forme avant particulièrement pointue, son gousset en 20, son guide-sangle 11 à l'extrémité opposée à sa pointe et son tube de fixation 21 à la partie inférieure du bras 7.

Un tel dispositif est particulièrement applicable aux transports routiers par camion et pour les remorques agricoles.

L'intérêt d'un tel agencement, dispositifs, sangles et tendeurs est caractérisé par le fait que l'on supprime les éboulements latéraux des balles d'un chargement puisqu'elles sont mutuellement rassemblées, compressées et fixées de part et d'autre au châssis de la remorque.

Aux figures 13 et 14 on a représenté l'élément allongé horizontal qui est constitué comme il a été précisé ci-dessus d'une plaque 3 en forme de U comportant une aile 3a présentant un bord replié 3b sur lequel est montée coulissante l'une des extrémités repliées 26 d'un organe de support 27 maintenu au moyen d'un boulon 28 et d'une butée 29 en appui contre l'intérieur du bord 3b.

A son autre extrémité, l'organe de support 27 comporte un bord replié 30 présentant un trou dans lequel est monté un boulon 31 pour la fixation d'un bord replié 32 d'une aiguille 33.

Ce dispositif permet de déplacer longitudinalement l'organe de support 27 et l'aiguille 33 par rapport à la plaque 3 et ensuite de les fixer par serrage du boulon 28.

Par ailleurs, l'aiguille 33 étant montée pivotante sur le support 27, il est possible d'amener celle-ci en position de travail perpendiculairement à l'axe longitudinal de l'élément horizontal ou plaque 3 et en position repliée ou escamotée parallèlement à l'axe longitudinal de l'élément horizontal 3.

Suivant une autre caractéristique, un élément de rallonge est monté à la partie inférieure 7 du bras vertical et il est verrouillé par un crochet prenant appui par pivotement sur l'un des tenons de l'organe d'ancrage 10 formant l'organe de guidage de la sangle.

Comme représenté à la figure 15, la partie 22a de la sangle 22 est fixée d'un côté sur le rochet 34 du tendeur 23 et de l'autre côté sur l'un des éléments d'un émerillon 35 qui présente un axe d'articulation 36.

Sur l'autre élément de l'émerillon 35 est fixée l'autre partie 22b de la sangle 22 qui est fixée sur le châssis du véhicule par un crochet 25.

Cette disposition permet d'orienter la partie 22b de la sangle lorsque le tendeur 23 a été mis en place sur le châssis du véhicule.

**Revendications**

1. Système pour l'arrimage sur un véhicule de chargement de balles de fourrage, de grandes dimensions, notamment de balles rondes comportant au moins un organe de retenue des balles en forme de T constitué d'au moins un élément allongé dans la partie médiane duquel est fixé une première extrémité d'un bras (6, 7) s'étendant perpendiculairement audit élément ; ledit élément allongé (3) présentant à chaque extrémité au moins une aiguille susceptible d'être engagée dans l'une de deux balles juxtaposées, caractérisé en ce que ledit bras (6, 7) présente à sa deuxième extrémité au moins un organe d'ancrage susceptible d'être engagé dans au moins une balle disposée verticalement relativement aux deux balles recevant les aiguilles (1) dudit élément allongé (3), et en ce que ledit système comprend une sangle (22) destinée à coopérer avec ledit organe de retenue pour arrimer lesdites balles, et pourvue de moyens (23, 25) de mise en tension et d'accrochage au châssis (24) du véhicule, ledit organe de retenue comprenant deux organes de guidage (2, 11) de ladite sangle (22) dont l'un (2) est disposé au centre de l'élément allongé (3) et dont l'autre (11) est disposé à ladite deuxième extrémité du bras (6, 7) du côté opposé à l'organe d'ancrage (10).

2. Système selon la revendication 1, caractérisé en ce qu'il comprend deux organes de retenue précités, destinés à être disposés de part et d'autre latéralement au chargement, associés à une sangle (22) précitée destinée à relier lesdits organes de retenue en maintenant ainsi les balles de fourrage précitées.

3. Système selon la revendication 1 ou 2, caractérisé en ce que le bras (6, 7) précité est télescopique.

4. Système selon l'une des revendications 1 ou 2, caractérisé en ce que le bras (6, 7) précité est constitué de plusieurs barres (6) disposées parallèlement et réunies à leur extrémité qui porte l'organe d'ancrage (10) précité.

5. Système selon l'une des revendications 1 ou 2, caractérisé en ce que le bras (6, 7) présente une forme triangulaire et en ce qu'il est constitué de deux barres (6) reliées par des traverses et réunies à leur extrémité qui porte l'organe d'ancrage (10).

6. Système selon l'une des revendications 1 à 3, caractérisé en ce que le bras (6, 7) précité porte à sa deuxième extrémité précitée au moins une barre (12) s'étendant parallèlement à l'élément allongé (3) précité ; ladite barre (12) étant munie de plusieurs organes d'ancrage (10).

7. Système selon l'une des revendications précédentes, caractérisé en ce que des aiguilles (33) sont montées sur l'élément allongé (3) de manière coulissante longitudinalement par l'intermédiaire d'un organe de support (27) sur lequel l'aiguille (33) est montée de façon pivotante pour occuper une position active perpendiculaire audit élément allongé (3) et une position escamotée dans laquelle l'aiguille (33) est parallèle audit élément allongé (3).

8. Dispositif selon la revendication 7, caractérisé en ce que l'élément allongé (3) précité est constitué d'une plaque présentant un bord replié (3b) sur lequel est montée coulissante l'extrémité de l'organe de support (27) qui comporte un moyen de serrage (28, 29) sur ledit bord, ledit organe de support (27) présentant un bord rabattu (30) sur lequel est montée de façon articulée avec un moyen de serrage (31) l'une des extrémités de l'aiguille (33).

9. Système selon l'une des revendications précédentes, caractérisé en ce qu'un élément de rallonge est monté sur la deuxième extrémité (7) dudit bras précité et en ce qu'il est verrouillé par un crochet prenant appui par pivotement sur l'un des tenons de l'organe d'ancrage (10) formant l'organe de guidage de la sangle.

10. Système selon l'une des revendications précédentes, caractérisé en ce qu'un émerillon (35) est disposé entre deux parties (22a, 22b) de la sangle (22) précitée dont une extrémité est fixée sur le rochet (34) du moyen de mise en tension (23).

**Claims**

1. Device for stowing loads of large-sized bales of fodder, in particular round bales, on a vehicle, comprising at least one T-shaped bales-retaining member constituted of at least one elongated element in the middle part of which is fixed a first end of an arm (6, 7) extending perpendicularly to said element ; said elongated element (3) being equipped at each end with at least one needle adapted to be engaged in one of the two juxtaposed bales, characterized in that said arm (6, 7) is equipped at its second end with at least one anchoring member adapted to be engaged in at least one bale situated vertically with respect to the two bales receiving the needles (1) of said elongated element (3), and in that said system comprises a strap (22) adapted to cooperate with said retaining member for stowing said bales, said strap being provided with means (23, 25) of stretching it and fastening it to the vehicle chassis (24), said retaining member comprising two members (2, 11) for guiding the strap (22); one member (2) of which is situated at the center of the elongated element (3), the other member (11) is situated at said second end of the arm (6, 7) on the opposite side of the anchoring member (10).

2. Device according to claim 1, characterized in that it comprises two above-mentioned retaining members, adapted to be placed on either side laterally to said load, associated with a strap (22) designed to join said retaining members while thus maintaining the bales of fodder.

3. Device according to claim 1 or 2, characterized in that the above mentioned arm (6, 7) is telescopic.

4. Device according to any one of claim 1 or 2, characterized in that the above mentioned arm (6, 7) is composed of a plurality of bars (6) arranged in parallel and joined together by their end carrying the above anchoring member (10).

5. Device according to any one of claim 1 or 2, characterized in that the arm (6, 7) is triangular-shaped and is constituted of two bars (6) interconnected by cross-pieces and converging together at their end carrying the anchoring member (10).

6. Device according to any one of claim 1 to 3, characterized in that the above mentioned arm (6, 7) carries at its second end at least one bar (12) extending in parallel to the elongated element (3), said bar (12) being equipped with a plurality of anchoring members (10).

7. Device according to any one of the preceding claims, characterized in that needles (33) are mounted on the elongated element (3) for sliding longitudinally via a support member (27) on which the needle (33) is pivotally mounted so as to occupy an active position perpendicular to said elongated element (3) and a retracted position in which the needle (33) is parallel to said elongated element (3).

8. Device according to claim 7, characterized in that the above mentioned elongated element (3) is constituted of a plate with a bent-over edge (3b) on which is slidably mounted the end of the support member (27) which comprises means (28, 29) of clamping same on said edge, said support member (27) having a bent-over edge (30) on which one of the ends of the needle (33) is pivotally mounted with clamping means (31).

9. Device according to any one of the preceding claims, characterized in that an extension element is mounted on the second end (7) of said arm and in that said element is locked in position by a hook member resting by a pivoting movement over one of the tenons of the anchoring member (10) forming the strap guide.

10. Device according to any one of the preceding claims, characterized in that a pivot member (35) is situated between two parts (22a, 22b) of the strap (22) of which one end is fastened to the ratchet (34) of the tightener (23).


**Patentansprüche**

1. System zur Sicherung einer Ladung von großen Futtermittelballen auf einem Fahrzeug, insbesondere von Rundballen, welches mindestens ein Halteorgan für die Ballen in T-Form, bestehend aus mindestens einem im Mittelteil länglichen Element, an dem ein erstes Ende eines sich senkrecht zum Element erstreckenden Armes (6, 7) befestigt ist, umfaßt, wobei das längliche Element (3) an jedem Ende mindestens eine in einen von zwei aneinanderstoßenden Ballen einsteckbare Nadel aufweist, dadurch gekennzeichnet, daß der Arm (6, 7) an seinem zweiten Ende mindestens ein Verankerungsorgan aufweist, welches in mindestens einen vertikal zu den beiden die Nadeln (1) des länglichen Elements (3) aufnehmenden Ballen angeordneten Ballen einschiebbar ist, und daß das System einen Gurt (22) zum Zusammenwirken mit dem Halteorgan zwecks Sicherung der Ballen umfaßt, welcher mit Mitteln (23, 25) zum Spannen und zur Befestigung am Gestell (24) des Fahrzeugs versehen ist, wobei das Halteorgan zwei Führungsorgane (2, 11) für den Gurt (22) umfaßt, von denen eines (2) in der Mitte des länglichen Elements (3) und das andere (11) am zweiten Ende des Armes (6, 7) auf der dem Verankerungsorgan (10) gegenüberliegenden Seite angeordnet ist.

2. System nach Anspruch 1, dadurch gekennzeichnet, daß es zwei Halteorgane umfaßt, die auf beiden Seiten seitlich zur Ladung anzubringen und an einem Gurt (22) zur Herstellung der Verbindung zwischen den Halteorganen angeschlossen sind, wobei so die Futterballen gehalten sind.

3. System nach Anspruch 1 oder 2, dadurch gekennzeichnet, daß der Arm (6, 7) teleskopisch ist.

4. System nach einem der Ansprüche 1 oder 2, dadurch gekennzeichnet, daß der Arm (6, 7) aus mehreren Stangen (6) besteht, die parallel angeordnet und an ihrem das Verankerungsorgan (10) tragenden Ende vereinigt sind.

5. System nach einem der Ansprüche 1 oder 2, dadurch gekennzeichnet, daß der Arm (6, 7) dreieckförmige Gestalt aufweist, und daß er aus zwei Stangen (6) besteht, die durch Querträger verbunden und an ihrem das Verankerungsorgan (10) tragenden Ende vereinigt sind.

6. System nach einem der Ansprüche 1 bis 3, dadurch gekennzeichnet, daß der Arm (6, 7) an seinem zweiten Ende mindestens eine Stange (12) trägt, die sich parallel zum länglichen Element (3) erstreckt und welche Stange (12) mit mehreren Verankerungsorganen (10) versehen ist.

7. System nach einem der vorhergehenden Ansprüche, dadurch gekennzeichnet, daß Nadeln (33) in Längsrichtung gleitend am länglichen Element (3) montiert sind, unter Zwischenschaltung eines Trägerorgans (27), an dem die Nadel (33) schwenkbar gelagert ist, um eine aktive Position senkrecht zum länglichen Element (3) und eine eingezogene Position, in welcher die Nadel (33) parallel zum länglichen Element (3) verläuft, einzunehmen.

8. Vorrichtung nach Anspruch 7, dadurch gekennzeichnet, daß das längliche Element (3) aus einer Platte besteht, die einen umgefalteten Bord (3b) aufweist, an welchem das Ende des Trägerorgans (27), das ein Klemmorgan (28, 29) am Bord aufweist, gleitend gelagert ist, wobei das Trägerorgan (27) einen umgebogenen Rand (30) aufweist, an welchem eines der Enden der Nadel (33) mit einem Klemmmittel (31) angelenkt ist.

9. System nach einem der vorhergehenden Ansprüche, dadurch gekennzeichnet, daß ein Verlängerungsstück am zweiten Ende (7) des Armes befestigt ist, und daß es mit einem Haken verriegelbar ist, welcher sich durch Verschwenken um einen der Stifte des Verankerungsorgans (10), der ein Führungsorgan für den Gurt bildet, abstützt.

10. System nach einem der vorhergehenden Ansprüche, dadurch gekennzeichnet, daß ein Zahnkettenrad (35) zwischen zwei Teilen (22a, 22b) des Gurtes (22) angeordnet ist, dessen eines Ende am Schieberad (34) des Spannmittels (23) befestigt ist.

Fig.1

Fig.2

0 162 759

Fig. 4

Fig. 3

Fig. 5

Fig. 6

Fig. 7

Fig. 8

Fig. 9

4

Fig. 10

Fig. 11

Fig. 12

# Fig.13

# Fig.14

0 162 759

22b

35

36

22a

34

23

25

Fig 15